# NEUE EUROPÄISCHE PATENTSCHRIFT

(11) **EP 1 125 377 B2**
(45) Veröffentlichungstag und Bekanntmachung des Hinweises auf die Entscheidung über den Einspruch: **20.04.2011**
(45) Hinweis auf die Patenterteilung: 12.06.2002
(21) Anmeldenummer: 99948847.1
(22) Anmeldetag: 23.09.1999
(51) Int. Cl.: H04B 7/08, H04L 1/06, H04L 27/26

(54) **VERFAHREN ZUM VERARBEITEN VON DURCH EIN MEHRANTENNENSYSTEM GLEICHZEITIG EMPFANGENEN OFDM-SIGNALEN**
METHOD FOR PROCESSING OFDM SIGNALS SIMULTANEOUSLY RECEIVED VIA A MULTIPLE ANTENNA SYSTEM
PROCEDE DE TRAITEMENT DE SIGNAUX OFDM RECUS SIMULTANEMENT VIA UN SYSTEME D'ANTENNES MULTIPLES

(30) Priorität: 26.10.1998 DE 19849318
(43) Veröffentlichungstag der Anmeldung: 22.08.2001
(73) Patentinhaber: Rohde & Schwarz GmbH & Co. KG, 81671 München (DE)
(72) Erfinder: LAUTERJUNG, Jürgen, D-82008 Unterhaching (DE); BALZ, Christoph, D-81543 München (DE)
(74) Vertreter: Körfer, Thomas
(86) Internationale Anmeldenummer: PCT/EP1999/007102
(87) Internationale Veröffentlichungsnummer: WO 2000/025446

(56) Entgegenhaltungen:
- EP-A- 0 600 547
- US-A- 3 633 107
- US-A- 5 265 122
- US-A- 5 530 725
- US-A- 5 579 343

## Beschreibung

Zur Datenübertragung (Ton, Bilder oder andere Daten) finden in der modernen Digitaltechnik sogenannte OFDM-Systeme (Orthogonal-Frequency-Division Multiplex) bzw. COFDM-Systeme (Coded OFDM) Anwendung. Bei diesem Prinzip wird der digitale Datenstrom vor der Aussendung über ein Sendernetz in viele Teilsignale aufgespalten, von denen jedes auf einem einzelnen Träger getrennt übertragen wird. Beim sogenannten DVB-T-System (Digital-Video-Broadcasting, terrestrial), das auch zur Übertragung von Daten allgemeiner Art dient, werden beispielsweise 1705 oder 6817 Einzelträger benutzt. Im Empfänger werden diese Teilinformationen wieder zu einer Gesamtinformation des senderseitigen digitalen Datenstromes zusammengefaßt.

Diese OFDM-Systeme sind bezüglich senderseitiger Aufbereitung und empfangsseitiger Rückgewinnung der Daten genormt (für DAB beispielsweise im DAB-Standard ETS 300401, für DVB-T im Standard ETS 300744). Gemeinsam ist diesen OFDM-Systemen, daß empfangsseitig das von einer Antenne empfangene Hochfrequenzsignal vorzugsweise nach Umsetzung in eine Zwischenfrequenz in einem OFDM-Demodulator demoduliert wird und so für jeden einzelnen Träger die zugehörigen I/Q-Werte gewonnen werden. Beim sogenannten pilottonkorrigierten OFDM-System, wie es bei DVB-T angewendet wird, wird gleichzeitig aus den mitübertragenen Pilottönen ein Kanalkorrekturwert ermittelt. Für jeden einzelnen Träger wird jeder I/Q-Wert mit dem jeweiligen Kanalkorrekturwert komplex multipliziert. Auf diese Weise wird erreicht, daß alle Träger konstante Amplituden besitzen, eventuelle Amplitudeneinbrüche einzelner Träger des Gesamtempfangsbandes, beispielsweise hervorgerufen durch Mehrweg-Empfangsstörungen, werden entsprechend kompensiert und ausgeglichen.

Bei solchen Systemen ist es außerdem üblich, zusätzlich zu den einzelnen Daten auch noch sogenannte Vertrauenswürdigkeits-Werte (Confidence) zu ermitteln und damit die Weiterverarbeitung der gewonnenen Digitalwerte in sogenannten Soft-Decision-Verfahren zu beeinflussen. Diese beiden bekannten Möglichkeiten zur Korrektur der I/Q-Werte über die Kanalkorrektur bzw. der gewonnenen Digitalwerte durch die Vertrauenswürdigkeits-Werte sind der Stand gegenwärtiger Empfängertechnik.

Zur Verbesserung des Signal/Rausch-Abstandes insbesondere für den mobilen Empfang solcher OFDM-Signale ist es bekannt, ein Mehrantennensystem mit zwei oder mehr Antennen und entsprechend zugeordneten getrennten Empfangskanälen vorzusehen und die analogen Empfangssignale im Empfänger in der HF- oder ZF-Ebene dieser mehreren Empfangskanäle zu kombinieren. Die Analogsignale der einzelnen Empfangskanäle werden dabei beispielsweise in Abhängigkeit von der Empfangsleistung frequenzabhängig gewichtet aufsummiert. Dabei werden jedoch nicht nur die Nutzsignale, sondern auch die Rauschanteile kombiniert und es ergibt sich im Prinzip sogar eine Verschlechterung des Signalrauschabstandes im Vergleich zum für das jeweilige Teilband günstigsten Empfangskanal. Diese analogen Kombinationsverfahren sind außerdem sehr aufwendig und folgen nur relativ langsam den jeweiligen Kanaleigenschaften. Sie weisen bei frequenzselektiver Aufsummierung nur relativ flache Selektionskurven auf, d.h. scharfe Einbrüche im Empfangsfrequenzbereich können nicht korrigiert werden.

EP 600 547 offenbart ein Diversity empfangssystem mit einer gewichteten kombination von Subbandsignalen.

Es ist daher Aufgabe der Erfindung, ein Verfahren zum Kombinieren von durch ein Mehrantennensystem gleichzeitig empfangenen OFDM-Signalen aufzuzeigen, das diese Nachteile vermeidet und zu einer deutlichen Verbesserung des Empfangs führt.

Diese Aufgabe wird durch die Merkmale des Anspruch 1 gelöst. Vorteilhafte Weiterbildungen ergeben sich aus dem Unteranspruch.

Gemäß der Erfindung werden in jedem einzelnen Empfangskanal des Mehrantennensystems die dort nach dem jeweiligen Standard sowieso gewonnenen Werte für Kanalkorrektur (Chanel Correction) oder Vertrauenswürdigkeit (Confidence) für eine entsprechende Gewichtung der demodulierten I/Q-Werte benutzt. Beim DAB-System, bei dem in an sich bekannter Weise die Vertrauenswürdigkeits-Werte bestimmt werden, können mit diesen gemäß der Erfindung die jeweiligen I/Q-Werte entsprechend gewichtet aufsummiert werden und so ein entsprechender Mittelwert aus den jeweiligen Empfangszweigen mit einem guten Signalrauschabstand für das Empfangssignal aus den einzelnen Empfangssignalen des Mehrantennensystems gewonnen werden, was vor allem für den mobilen Empfang von DAB-Signalen von Vorteil ist, da hierbei aufgrund der Eigenschaften des Übertragungskanals eine schwierigere Empfangssituation gegeben ist als bei einem stationären Empfang. Es können so Fading-Störungen ausgeglichen werden.

Besonders vorteilhaft ist es, diese Korrektur in Abhängigkeit von den Kanalkorrekturwerten vorzunehmen, wie sie beim DVB-T-System vorgesehen sind. Hier ist ebenfalls ein mobiler Empfang mit gutem Signalrauschverhältnis möglich, wobei diese gewichtete Bewertung der empfangenen Signale in den einzelnen Empfangskanälen einen besonders einfachen Auswertalgorithmus ermöglicht.

Die Erfindung wird im Folgenden anhand schematischer Zeichnungen an zwei Ausführungsbeispielen näher erläutert.

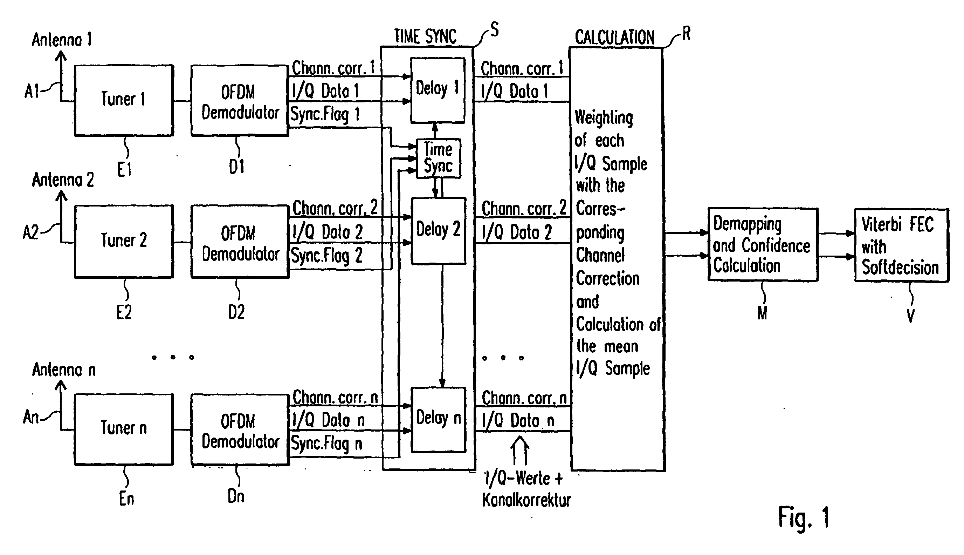

Fig. 1 zeigt das Prinzipschaltbild einer Empfangsanordnung zur Verarbeitung von pilottongestützten OFDM-Signalen mit einer digitalen Zusammenführung der Signale der einzelnen Träger des Mehrantennensystems vor dem Entscheider. Die empfangenen Multiträger-OFDM-Signale werden über mehrere Antennen A1 bis An empfangen und können ggfs. über einzelne Empfänger E1, E2 bis En in eine geeignete Zwischenfrequenz umgesetzt werden. Alle Empfänger E1 bis En sind auf die gleiche Empfangsfrequenz eingestellt, gegebenenfalls kann die Abwärtsmischung in die Zwischenfrequenz der Einfachheit halber mit einem gemeinsamen Oszillator realisiert sein. Anschließend wird in jedem der n Empfangskanäle die Demodulation der OFDM-Signale jeweils in getrennten Demodulatoren D1 bis Dn durchgeführt und gleichzeitig werden auch die zugehörigen Kanalkorrekturwerte gewonnen, die ein Maß für den Pegel der einzelnen Träger des Multiträgersystems sind und damit auch ein Maß für die Wahrscheinlichkeit dafür, daß das mit diesem Träger übertragene Symbol korrekt ist.

Die am Ausgang der Demodulatoren zur Verfügung stehenden I/Q-Werte für jeden einzelnen Träger werden einer Zeitsynchronisationseinrichtung S zugeführt, dort werden durch entsprechende Verzögerungseinrichtungen eventuelle zeitliche Verschiebungen der insgesamt n I/Q-Signale ausgeglichen, so daß am Ausgang dieser Zeitsynchronisationseinrichtung S zur selben Zeit die I/Q-Werte von korrespondierenden Trägern anliegen, die dann einer Recheneinrichtung R zugeführt und dort wie nachfolgend beschrieben verarbeitet werden. Die Zeitsynchronisation kann mit den aus den OFDM-Demodulatoren stammenden Synchronisations-Flags durchgeführt werden.

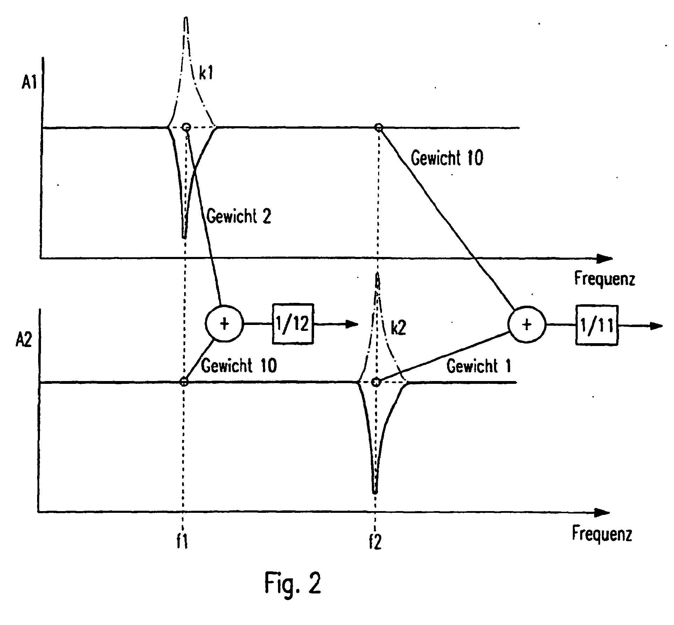

Bevor die so in bekannter Weise aufbereiteten I/Q-Werte im Entscheider (Demapping) M zu einzelnen Bits reduziert werden, werden sie in der Recheneinrichtung R mit einem Wert k, der proportional zum Kehrwert der jeweiligen Kanalkorrektur ist, komplex multipliziert und so gewichtet. Diese Gewichtung wird zunächst für alle n Empfangskanäle für jeden I/Q-Wert einzeln durchgeführt. Dabei erhalten I/Q-Werte ein besonders hohes Gewicht, wenn sie möglichst wenig durch die Kanalkorrektur verändert werden. AnschlieBend werden alle einander zugeordneten I/Q-Werte aufsummiert und dann durch die Summe aller Gewichte geteilt. Fig. 2 zeigt diese Art von Wichtung und Aufsummierung für zwei Antennen A1 und A2. Über die Antenne A1 werden von den insgesamt 1705 oder 6817 einzelnen Trägern des Systems bei der Frequenz f1 der dort empfangene Träger infolge von Fading nur mit verringerter Amplitude empfangen. Dies wird durch den Kehrwert k1 der für diesen Empfangskanal gewonnenen Kanalkorrektur ausgedrückt. Der Träger bei der Frequenz f1 wird also mit einem relativ geringen Wert gewichtet, beispielsweise nur mit dem Kanalkorrekturwert 2, während die Träger im Bereich unterhalb und oberhalb der Frequenz f1 die mit vollem Pegel empfangen werden, sehr hoch gewichtet werden, beispielsweise mit dem Gewicht 10. Bei der Antenne A2 liegt dieser gering bewertete Empfangsbereich an einer anderen Stelle bei der Frequenz f2.

Wenn nun die so unterschiedlich mit beispielsweise 2 und 10 im Bereich f1 gewichteten I/Q-Werte aufsummiert und schließlich durch die Gesamtanzahl aller Gewichte (im Beispiel 12) geteilt werden, so wird ein Mittelwert gewonnen, der über den Gesamtfrequenzbereich einen konstanten guten Empfangswert besitzt. Die so in der Recheneinrichtung R gewonnenen gemittelten I/Q-Werte werden dann dem Entscheider M zugeführt und dort in bekannter Weise weiter ausgewertet. Es kann dort gegebenenfalls auch die Vertrauenswürdigkeit (Confidence) der Information berechnet werden. Anschließend werden die Daten in einem üblichen Viterbi-Decoder V mit Softdecision weiterverarbeitet.

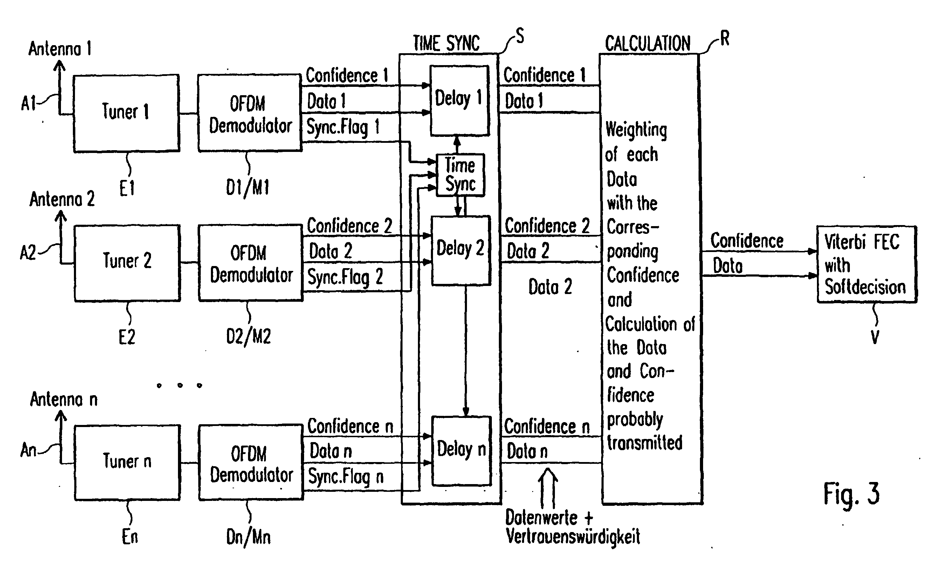

Fig. 3 zeigt ein Ausführungsbeispiel einer Empfangsanordnung zur Verarbeitung von OFDM-Signalen in einem Mehrantennensystem durch digitale Zusammenführung nach dem Entscheider M. In manchen Fällen stehen die I/Q-Werte nicht vor dem Entscheider für eine Weiterverarbeitung zur Verfügung, sondern erst nach dem Entscheider M, der in diesem Fall zum Beispiel für jeden einzelnen Empfangskanal in den Demodulator D1 integriert ist. Am Ausgang des Demodulators stehen also bereits die zu einzelnen Bits reduzierten Datenworte zur Verfugung und zwar zusammen mit den ebenfalls in den Entscheidern M1 bis Mn berechneten Vertrauenswürdigkeits-Werten, die nach der Zeitsynchronisation in der Zeitsynchronisationseinrichtung S in der Recheneinrichtung R wie folgt gewichtet und weiterverarbeitet werden.

Jedes einzelne Datenwort der n Empfangskanäle wird mit Hilfe eines geeigneten Algorithmus zurückgeführt auf die ursprünglichen I/Q-Werte. Die so gewonnenen entsprechenden I/Q-Werte werden dann mit dem Wert der jeweiligen Vertrauenswürdigkeits-Information komplex multipliziert, anschließend werden alle so gewichteten I/Q-Werte wieder wie im Zusammenhang mit Fig. 2 beschrieben aufsummiert und dann durch die Anzahl aller Gewichte geteilt. Der so ermittelte Mittelwert aller I/Q-Werte wird dann nach der Reduktion der I/Q-Werte auf die Datenbits wieder dem Viterbi-Decoder mit Softdecision V zugeführt und weiterverarbeitet.

## Patentansprüche

1. Verfahren zum Verarbeiten von durch ein Mehrantennensystem mit mehreren getrennten Empfangskanälen gleichzeitig empfangenen OFDM-Signalen, wobei in den Empfangskanälen in bekannter Weise für jeden Träger des OFDM-Signals aus den Pilottönen die Kanalkorrekturwerte ermittelt werden,
wobei für jeden einzelnen Träger jeder I/Q-Wert mit dem jeweiligen Kanalkorrekturwert komplex multipliziert wird, um auf diese Weise zu erreichen, daß alle Träger konstante Amplituden besitzen,
wobei aus den Kanalkorrekturwerten Wichtungsfaktoren abgeleitet werden, mit denen die im OFDM-Demodulator gewonnenen I/Q-Werte jedes einzelnen Trägers des OFDM-Signals unterschiedlich gewichtet werden, derart, daß mit geringem Pegel empfangene Träger gering und mit großem Pegel empfangene Träger hoch gewichtet werden,
wobei die I/Q-Werte mit einem Wert, der proportional zum Kehrwert der jeweiligen Kanalkorrektur ist, komplex multipliziert und so gewichtet werden,
und die so gewichteten I/Q-Werte dann aufsummiert und durch die Summe aller Wichtungsfaktoren geteilt werden.

2. Verfahren nach Anspruch 1,
**dadurch gekennzeichnet,**
**daß** die I/Q-Werte am Ausgang des Demodulators einer Zeitsynchroneinrichtung zugeführt werden, so daß die I/Q-Werte von korrespondierenden Trägern der einzelnen Empfangskanäle jeweils zu gleicher Zeit für die Weiterverarbeitung zur Verfügung stehen.

3. Verfahren nach Anspruch 1 oder 2,
**dadurch gekennzeichnet,**
**daß** die I/Q-Werte jedes einzelnen Trägers des OFDM-Signals in Abhängigkeit von den aus den Pilottönen gewonnenen Kanalkorrekturwerten gewichtet werden, derart, daß für große Kanalkorrekturwerte geringe Wichtungsfaktoren und für kleine Kanalkorrekturwerte große Wichtungsfaktoren gewählt werden.

4. Verfahren nach einem der vorhergehenden Ansprüche,
**dadurch gekennzeichnet,**
**daß** die nach dem Entscheider verfügbaren Datenworte in ihre ursprünglichen I/Q-Werte rückgerechnet und dann mit aus den Pilottönen ermittelten Vertrauenswürdigkeitswerten komplex gewichtet werden.

## Claims

1. Method of processing OFDM signals which are received simultaneously by a multi-antenna system with multiple separate reception channels,
in the reception channels, in known manner, for each carrier of the OFDM signal, the channel correction values being determined from the pilot tones,
for each individual carrier, each I/Q value being complexly multiplied by the appropriate channel correction value, in this way to achieve that all carriers have constant amplitudes,
weighting factors, by which the I/Q values of each individual carrier of the OFDM signal, which are obtained in the OFDM demodulator, are differently weighted in such a way that carriers received with a low level are weighted low and carriers received with a high level are weighted high, being derived from the channel correction values,
the I/Q values being complexly multiplied by a value which is proportional to the reciprocal of the appropriate channel correction and thus weighted,
and the thus weighted I/Q values then being summed and divided by the sum of all weighting factors.

2. Method according to Claim 1,
**characterized in that**
at the output of the demodulator, the I/Q values are fed to a time synchronising device, so that the I/Q values of corresponding carriers of the individual reception channels are each available at the same time for further processing.

3. Method according to Claim 1 or 2,
**characterized in that**
the I/Q values of each individual carrier of the OFDM signal are weighted depending on the channel correction values obtained from the pilot tones, in such a way that for large channel correction values small weighting factors are chosen, and for small channel correction values large weighting factors are chosen.

4. Method according to any one of the preceding claims,
**characterized in that**
the data values which are available according to the decider are converted back into their original I/Q values, and then complexly weighted with trustworthiness values determined from the pilot tones.

## Revendications

1. Procédé de traitement de signaux OFDM reçus simultanément par un système d'antennes multiples avec plusieurs voies de réception séparées,
dans lequel les valeurs de correction de voie sont déterminées dans les voies de réception selon la manière connue pour chaque porteur du signal OFDM issu des signaux pilotes,
dans lequel, pour chaque porteur particulier, chaque valeur I/Q est multipliée de manière complexe par la valeur de correction de voie correspondante afin d'obtenir de cette façon que tous les porteurs aient une amplitude constante,
dans lequel, à partir des valeurs de correction de voie sont déduits des facteurs de pondération avec lesquels les valeurs I/Q, obtenues dans le démodulateur OFDM, de chaque porteur du signal OFDM sont pondérées différemment de manière telle que des porteurs reçus avec un faible niveau soient pondérés faiblement et que des porteurs reçus avec un fort niveau soient pondérés fortement,
dans lequel les valeurs I/Q sont multipliées de manière complexe par une valeur, qui est inversement proportionnelle à la correction de voie respective, et sont pondérées de cette manière, et les valeurs I/Q ainsi pondérées sont ensuite additionnées et divisées par la somme de tous les facteurs de pondération.

2. Procédé selon la revendication 1,
**caractérisé en ce**
**que** les valeurs I/Q à la sortie du démodulateur sont transmises à une installation de synchronisation temporelle de sorte que les valeurs I/Q des porteurs correspondants des voies de réception particulières soient à chaque fois disponibles au même moment pour le traitement ultérieur.

3. Procédé selon la revendication 1 ou 2,
**caractérisé en ce**
**que** les valeurs I/Q de chaque porteur particulier du signal OFDM sont pondérées en fonction des valeurs de correction de voie obtenues par les signaux pilotes de sorte que pour des valeurs de correction de voie élevées on choisisse des facteurs de pondération faibles et pour des valeurs de correction de voie faibles des facteurs de pondération élevés.

4. Procédé selon l'une quelconque des revendications précédentes,
**caractérisé en ce**
**que** les mots porteurs de données disponibles en aval de l'unité de restitution sont recalculés selon leurs valeurs I/Q originelles puis pondérés de manière complexe avec les valeurs de confiance déterminées à partir des signaux pilotes.
